# EUROPÄISCHE PATENTSCHRIFT

(11) **EP 0 400 352 B1**
(45) Veröffentlichungstag und Bekanntmachung des Hinweises auf die Patenterteilung: **06.04.1994**
(21) Anmeldenummer: 90108464.0
(22) Anmeldetag: 04.05.1990
(51) Int. Cl.: H01S 3/034

(54) **Gaslaser**
Gas laser
Laser à gaz

(30) Priorität: 31.05.1989 DE 3917744
(43) Veröffentlichungstag der Anmeldung: 05.12.1990
(73) Patentinhaber: SIEMENS AKTIENGESELLSCHAFT, 80333 München (DE)
(72) Erfinder: Krüger, Hans, Dipl.-Phys, D-8000 München 83 (DE); Welsch, Wolfgang, Dr., Ing., D-8011 Baldham (DE); Schulz, Michael, Dipl.-Ing., D-6652 Bexbach 3 (DE); Pape, Heinz, Dipl.-Phys, D-8000 München 82 (DE)

(56) Entgegenhaltungen:
- EP-A- 0 396 888
- DE-B- 2 506 707
- DE-B- 2 754 756

## Beschreibung

Die vorliegende Erfindung betrifft einen Gaslaser nach dem Oberbegriff des Patentanspruchs 1. Ein derartiger Gaslaser ist aus DE-B-25 06 707 bekannt und ist Gegenstand der Anmeldung EP-A-0 396 888, die Stand der Technik nach Artikel 54 (3) EPÜ darstellt. Es hat sich jedoch herausgestellt, daß in derartigen Gaslasern im Gehäuserohr in der Nähe der Metallkappen nach dem Lötvorgang und auch nach späteren Temperaturbelastungen oder durch Alterung (Spannungsrißkorrosion) Sprünge auftreten können.

Die Aufgabe, die der vorliegenden Erfindung zugrundeliegt, besteht darin, bei einem Gaslaser gemäß dem Oberbegriff derartige Sprünge zu vermeiden. Diese Aufgabe wird durch die kennzeichnenden Merkmale des Patentanspruchs 1 gelöst.

Der vorliegenden Erfindung liegt die Erkenntnis zugrunde, daß durch unterschiedliche Temperaturausdehnung im Bereich der Fixierung der Spiegelhalterung an der Metallkappe eine Verformung der Metallkappe eintritt, welche insbesondere bei der Abkühlung an der Außenseite des Gehäuserohres Zugspannungen erzeugt, die die beobachteten Sprünge verursachen. Jede Veränderung von mechanischen Spannungen zwischen der Spiegelhalterung und der Metallkappe überträgt sich auf das Gehäuserohr, wobei sich insbesondere auf der äußeren Oberfläche des Gehäuserohres angreifende Zugspannungen, die parallel zur Achse des Gehäuserohres verlaufen, schädigend auswirken. Diese entstehen hauptsächlich beim Abkühlen des Lasers, da der Temperaturausdehnungskoeffizient der Spiegelhalterung grundsätzlich größer ist als der der Metallkappe, was wiederum durch die Materialien für den Spiegel bzw. das Gehäuserohr bedingt ist.

Eine einfache und vorteilhafte Ausführungsform der Erfindung besteht darin, daß der erste Ringbereich der Spiegelhalterung einen geringeren Außendurchmesser besitzt als ein angrenzender zweiter Ringbereich. Der zweite Ringbereich hat hier aus Gründen der mechanischen Stabilität und wegen der üblicherweise vorgesehenen Justiernut einen relativ großen Außendurchmesser. Es genügt jedoch, einen schmalen, an die Metallkappe angrenzenden Bereich mit geringerem Durchmesser auszubilden, um die Spannungen in der Metallkappe zu veringern.

Häufig soll an dem zweiten Ringbereich eine Spannungszüfuhrung angebracht werden. In diesen Fällen empfiehlt es sich, daß an den ersten Ringbereich der Spiegelfassung mit geringem Außendurchmesser in axialer Richtung ein zweiter Ringbereich mit größerem Außendurchmesser angrenzt, daß der zweite Ringbereich eine Hinterschneidung enthält, daß der erste Ringbereich mit der Metallkappe verlötet ist und daß das Lot den zweiten Ringbereich zumindest in radialer Richtung außerhalb der Hinterschneidung nicht mit der Kappe verbindet. Hierdurch kann der zweite Ringbereich bis unmittelbar an die Metallkappe herangeführt sein, da das Lot im Bereich der Hinterschneidung keiner nennenwerten Kapillarwirkung ausgesetzt ist und somit nicht in den Spalt zum zweiten Ringbereich fließt.

Eine weitere vorteilhafte Ausführungsform besteht darin, daß die Spiegelfassung aus zwei Teilen mit unterschiedlichem Temperaturausdehnungskoeffizienten zusammengesetzt ist und daß der an der Metallkappe fixierte ringförmige Teil einen an den der Metallkappe angepaßten Temperaturausdehnungskoeffizienten besitzt. Vorteilhaft ist dabei der Übergang zwischen den beiden Teilen der Spiegelfassung im Bereich eines geringen Durchmessers gelegen, vorzugsweise im Bereich einer Justiernut der an sich bekannten Art. Bei dieser Ausführungsform kann, aber muß nicht die beschriebene Verringerung des Querschnittes vorgenommen sein. Ein leichter verarbeitbares Material kann beispielsweise für das an die Metallkappe angrenzende ringförmige Teil verwendet werden, wenn dessen Temperaturkoeffizient zwischen dem der Metallkappe und dem des angrenzenden Außenteils liegt.

Die Erfindung wird nun anhand von drei Figuren näher erläutert. Sie ist nicht auf die in den Figuren gezeigten Beispiele beschränkt. Die Figuren zeigen erfindungsgemäße Ausführungsformen von Lasern in geschnittener und gebrochener Ansicht.

Ein Gehäuserohr 1 ist mit einer Metallkappe 2 über Glaslot 3 verlötet. Auf die Metallkappe 2 ist eine Spiegelhalterung 4 aufgelötet, wobei die Spiegelhalterung 4 in dem an die Metallkappe 2 angrenzenden Bereich einen Ringbereich 5 mit kleinerem Durchmesser aufweist. An diesen Ringbereich 5 grenzt ein Ringbereich 6 mit größerem Durchmesser an, der der Spiegelhalterung die notwendige Festigkeit gibt.

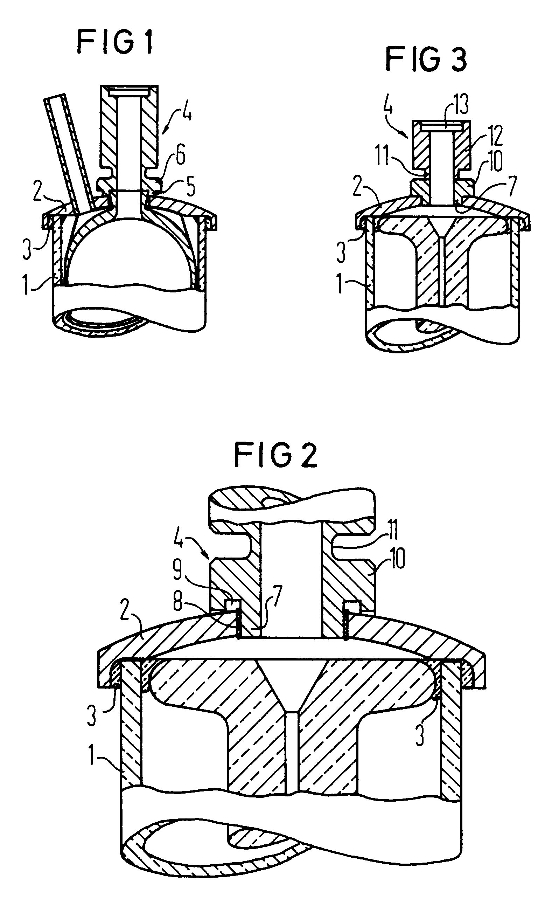

Gemäß FIG 2 ist ein ringförmiger Teil 7 der Spiegelfassung 4 in eine entsprechende Bohrung der Metallscheibe 2 eingelötet. Das Lot 8 reicht bis zu einer Hinterschneidung 9, die es am Weiterfließen hindert. Ein Ringbereich 10 mit größerem Durchmesser, welcher die Hinterschneidung 9 enthält, reicht bis an die Metallkappe 2 heran, ist mit dieser aber nicht kraftschlüssig verbunden. Diese Ausführungsführung ermöglicht das Anbringen eines Kontaktringes am Ringbereich 10, ohne daß dieser Kontaktring in einen Spalt zwischen der Metallkappe 2 und den Ringbereich 10 hineinrutschen kann.

FIG 3 zeigt eine Ausführungsform ähnlich der FIG 2, wobei jedoch keine Hinterschneidung 9 erforderlich ist, da die Ringbereiche 7 und 10 aus einem Material bestehen, dessen Temperaturausdehnungskoeffizient an den der Metallkappe 2 angepaßt ist, während erst im Bereich der Justiernut 11 ein Außenteil 12 der Spiegelhalterung 4 ansetzt, dessen Temperaturausdehnungskoeffizient an den des Spiegels 13 angepaßt ist.

## Patentansprüche

1. Gaslaser, welcher ein Gehäuserohr (1) aus Glas, zumindest eine daran angrenzende Metallkappe (2), eine an der Metallkappe befestigte Spiegelhalterung (4) und einen darin gehalterten Resonatorspiegel (13) enthält, wobei der Ausdehnungskoeffizient der Metallkappe an den des Gehäuserohres angepaßt und von dem der Spiegelhalterung verschieden ist und wobei die Spiegelhalterung einen ersten Ringbereich (7) umfaßt, welcher an der Metallkappe fixiert ist, **dadurch gekennzeichnet**,
daß Maßnahmen vorgesehen sind, die thermisch hervorgerufene mechanische Spannungen zwischen der Metallkappe und der Spiegelhalterung im Bereich der gegenseitigen Fixierung dieser beiden Teile vermindern, vermeiden oder konstant halten.

2. Gaslaser nach Anspruch 1, **dadurch gekennzeichnet**, daß der erste Ringbereich der Spiegelhalterung einen geringeren Außendurchmesser besitzt als ein angrenzender zweiter Ringbereich der Spiegelhalterung.

3. Gaslaser nach Anspruch 1, **dadurch gekennzeichnet**, daß an den ersten Ringbereich der Spiegelhalterung in axialer Richtung ein zweiter Ringbereich mit größerem Außendurchmesser angrenzt, daß der zweite Ringbereich eine Hinterschneidung enthält, daß der erste Ringbereich mit der Metallkappe verlötet ist und daß das Lot den zweiten Ringbereich zumindest in radialer Richtung außerhalb der Hinterschneidung nicht mit der Metallkappe verbindet.

4. Gaslaser nach Anspruch 1, **dadurch gekennzeichnet**, daß die Spiegelhalterung aus zwei Teilen mit unterschiedlichem Temperaturausdehnungskoeffizienten zusammengesetzt ist, und daß das an der Metallkappe fixierte ringförmige Teil einen an den der Metallkappe angepaßten Temperaturausdehnungskoeffizienten besitzt.

5. Gaslaser nach Anspruch 4, **dadurch gekennzeichnet**, daß der Übergang zwischen den beiden Teilen der Spiegelhalterung im Bereich eines geringeren Durchmessers liegt.

6. Gaslaser nach Anspruch 4, **dadurch gekennzeichnet**, daß das an die Metallkappe angrenzende ringförmige Teil der Spiegelfassung einen Temperaturkoeffizienten besitzt, der zwischen dem der Metallkappe und dem des Außenteiles liegt.

## Claims

1. Gas laser which contains a housing tube (1) made of glass, at least one metal cap (2) adjacent thereto, a mirror mount (4) attached to the metal cap and a resonator mirror (13) held in said mirror mount, the coefficient of thermal expansion of the metal cap being adapted to that of the housing tube and different from that of the mirror mount, and the mirror mount comprising a first annular region (7) which is fixed to the metal cap, characterized in that measures are provided which reduce, avoid or keep constant thermally induced mechanical stresses between the metal cap and the mirror mount in the region of the mutual fixing of these two parts.

2. Gas laser according to Claim 1, characterized in that the first annular region of the mirror mount has a smaller outside diameter than an adjacent second annular region of the mirror mount.

3. Gas laser according to Claim 1, characterized in that a second annular region of larger outside diameter is adjacent to the first annular region of the mirror mount in the axial direction, in that the second annular region contains an undercut, in that the first annular region is soldered to the metal cap, and in that the solder does not join the second annular region to the metal cap at least in the radial direction outside the undercut.

4. Gas laser according to Claim 1, characterized in that the mirror mount is assembled from two parts having different coefficients of thermal expansion, and in that the annular part fixed to the metal cap has a coefficient of thermal expansion adapted to that of the metal cap.

5. Gas laser according to Claim 4, characterized in that the annular transition between the two parts of the mirror mount is situated in the region of a smaller diameter.

6. Gas laser according to Claim 4, characterized in that the annular part of the mirror mount adjacent to the metal cap has a coefficient of thermal expansion which is between that of the metal cap and that of the outer part.

## Revendications

1. Laser à gaz qui comporte un tube (1) en verte formant enveloppe, au moins un couvercle (2) métallique adjacent, une pièce de fixation (4) de miroir fixée au couvercle métallique et un miroir (13) formant résonateur, qui y est fixé, le coefficient de dilatation du couvercle métallique étant adapté à celui du tube formant enveloppe et étant différent de celui de la pièce de fixation du miroir et la pièce de fixation du miroir comportant une première partie (7) annulaire, qui est fixée au couvercle métallique, caractérisé en ce qu'il est prévu des moyens qui minimisent, empêchent ou maintiennent constantes les contraintes mécaniques provoquées par la chaleur entre le couvercle métallique et la pièce de fixation du miroir, dans la région de la fixation mutuelle de ces deux pièces.

2. Laser à gaz suivant la revendication 1, caractérisé en ce que la première partie annulaire de la pièce de fixation du miroir a un diamètre extérieur plus petit qu'une deuxième partie annulaire adjacente de la pièce de fixation du miroir.

3. Laser à gaz suivant la revendication 1, caractérisé en ce qu'à la première partie annulaire de la pièce de fixation du miroir, est adjacente dans la direction axiale à une deuxième partie annulaire de plus grand diamètre extérieur, en ce que la deuxième partie annulaire comporte une contre-dépouille, en ce que la première partie annulaire est brasée au couvercle métallique, et en ce que la brasure ne relie pas la deuxième partie annulaire au moins en direction radiale à l'extérieur de la contre-dépouille au couvercle métallique.

4. Laser à gaz suivant la revendication 1, caractérisé en ce que la pièce de fixation du miroir est composée de deux parties ayant des coefficients de dilatation thermique différents, et en ce que la partie annulaire fixée au couvercle métallique a un coefficient de dilatation thermique adapté à celui du couvercle métallique.

5. Laser à gaz suivant la revendication 4, caractérisé en ce que la transition entre les deux parties de la pièce de fixation du miroir se trouve dans la zone ayant le diamètre le plus petit.

6. Laser à gaz suivant la revendication 4, caractérisé en ce que la partie annulaire de la pièce de fixation du miroir, qui est adjacente au couvercle métallique, a un coefficient de température qui est compris entre celui du couvercle métallique et celui de la partie extérieure.
